# EUROPÄISCHE PATENTANMELDUNG

(11) **EP 2 582 009 A1**
(43) Veröffentlichungstag der Anmeldung: **17.04.2013**
(21) Anmeldenummer: 12188202.1
(22) Anmeldetag: 11.10.2012
(51) Int. Cl.: H02J 7/00

(54) **Energiespeichersystem mit implementiertem Regelungsalgorithmus und Verfahren zum Steuern der Ladezustände von dessen Elementen**

(30) Priorität: 13.10.2011 DE 102011054479
(71) Anmelder: Fraunhofer-Gesellschaft zur Förderung der angewandten Forschung e.V., 80686 München (DE)
(72) Erfinder: Kähler, Dirk, Dr., 25524 Itzehoe (DE); Puls, Sebastian, 25524 Itzehoe (DE)
(74) Vertreter: Olgemöller, Luitgard Maria

(57) **Zusammenfassung**

Die Erfindung betrifft ein Verfahren zum Steuern der Ladezustände von Elementen eines Energiespeichersystems mit einer Reihenschaltung von mehreren Elementen, bei dem jedes Element

- einen einzelnen oder eine Gruppe von mehreren Energiespeichern, wie z.B. Akkumulatoren oder Batterien, sowie
- (a) einen Wechselschalter (Umschalter) zum Herausnehmen des Elements aus der Reihenschaltung und zum Überbrücken des herausgenommenen Elements oder (b) einen Trennungsschalter zum Herausnehmen des Elements aus der Reihenschaltung und einen Überbrückungsschalter zum Überbrücken des herausgenommenen Elements aufweist,
bei welchem Verfahren
- ein mit den anderen Elementen in Reihe geschaltetes Element aus der Reihenschaltung herausgenommen und überbrückt wird, indem
(a) sein Wechselschalter aus dem das Element enthaltenden Zweig in den Überbrückungszweig umgelegt wird bzw.
(b) sein Trennungsschalter aus dem An- in den Aus-Zustand umgelegt wird und sein Überbrückungsschalter aus dem Aus- in den An-Zustand umgelegt wird, und/oder

- ein aus der Reihenschaltung herausgenommenes und überbrücktes Element in die Reihenschaltung aufgenommen wird, indem
(a) sein Wechselschalter aus dem Überbrückungszweig in den das Element enthaltenden Zweig umgelegt wird bzw.
(b) sein Überbrückungsschalter aus dem An- in den Aus-Zustand umgelegt wird und sein Trennungsschalter aus dem Aus- in den An-Zustand umgelegt wird,

worin
die Überbrückung der Elemente und deren Aufnahme in die Reihenschaltung durch einen Regelalgorithmus gesteuert werden.

## Beschreibung

Die Erfindung betrifft Systeme zur Speicherung elektrischer Energie, im Folgenden als Energiespeichersysteme bezeichnet, mit mehreren in Reihe geschalteten Elementen, wobei jedes Element einen einzelnen oder eine Gruppe von mehreren seriell und/oder parallel geschalteten Energiespeichern aufweist. Weiterhin betrifft die Erfindung ein Verfahren zum Steuern der Ladezustände von Elementen derartiger Energiespeichersysteme sowie deren Verwendung zum Stabilisieren der Ausgangsspannung, zur Speicherung regenerativer Energien und/oder zum dynamischen Cell-Balancing.

Energiespeichersysteme sind in der Regel modular aus einzelnen Energiespeichern, wie z.B. Akkumulator- oder Batteriezellen, aufgebaut. Die Gesamtspannung des Systems ergibt sich durch die Reihenschaltung der einzelnen Energiespeicher zu einem Strang. Zur Erhöhung der Speicherkapazität werden zudem entweder einzelne Energiespeicher oder komplette Stränge parallel geschaltet.

Aus diesem Aufbau eines Energiespeichersystems ergeben sich regelmäßig folgende Probleme:
a) In Folge minimaler Unterschiede zwischen den Energiespeichern kommt es bei mehrfachem Laden und Entladen zu unterschiedlichen Ladezuständen der einzelnen Energiespeicher. Während zwischen den parallel geschalteten Energiespeichern ein automatischer Ladungsaustausch stattfindet, nehmen die Unterschiede bei der seriellen Verschaltung im Laufe der Zeit zu. Da die Energiespeicher nur innerhalb bauartbedingter Spannungsgrenzen betrieben werden dürfen, führt dies effektiv zu einer Verringerung der nutzbaren Kapazität. Herkömmliche Maßnahmen zur Angleichung der Spannungen einzelner Energiespeicher werden als Cell-Balancing bezeichnet.
b) Die Gesamtspannung des Energiespeichersystems entspricht bei einer konventionellen Reihenschaltung der Energiespeicher der Summe der Einzelspannungen. Hängt die Spannung der einzelnen Energiespeicher vom Ladezustand ab, so variiert die Gesamtspannung des Systems in Abhängigkeit vom Ladezustand der einzelnen Energiespeicher in einem weiten Bereich. Für eine effiziente Nutzung, z.B. im Hinblick auf ein anzuschließendes Gerät oder auf die Einspeisung in ein Netz, ist hingegen eine möglichst geringe Variation der Gesamtspannung des Energiespeichersystems vorteilhaft. Wird das Energiespeichersystem in Kombination mit einer regenerativen Energiequelle betrieben, so wäre es vorteilhaft, die Lade- / Entladespannung des Energiespeichersystems an die zeitlich fluktuierende Spannung der regenerativen Energiequelle anzupassen.

Traditionell werden drei verschiedene Methoden eingesetzt, um die Ladezustände der einzelnen Energiespeicher in einem Energiespeichersystem aneinander anzugleichen, die im Folgenden exemplarisch jeweils anhand eines Beispiels beschrieben werden:
i) Intrinsisches Cell-Balancing: Bei Blei-Säure-Batterien und einigen anderen Akkumulatortypen treten beim Erreichen der Ladeschlussspannung weitgehend unschädliche sekundäre chemische Reaktionen auf, sodass die Spannung der einzelnen Batteriezellen einen maximalen Wert nicht überschreiten kann. Ein Angleichen der Zellspannungen aneinander kann in solchen Systemen daher durch ein moderates Überladen erfolgen.
ii) Passives Cell-Balancing: Bei Lithium-lonen-Akkumulatoren werden die Zellspannungen elektronisch überwacht. Um die einzelnen Spannungen aneinander anzugleichen, werden die Zellen mit einer höheren Spannung kontrolliert entladen, z.B. mit einem Widerstand. Die überschüssige elektrische Energie wird dabei in Wärme umgewandelt.
iii) Aktives Cell-Balancing: Im Gegensatz zum passiven Cell-Balancing wird die überschüssige Energie beim kontrollierten Entladen einer Zelle in einem Kondensator oder einer Spule zwischengespeichert und anschließend in eine andere Zelle übertragen. Bekannte Beispiele sind die PowerPump-Technologie von Texas Instruments (Application Note: "PowerPump™ Balancing", SLUA524A-July 2009-Revised October 2009, Chipsatz BQ78PL116), eine von Atmel vorgeschlagene Methode (Application Note: "Active Cell Balancing Methods for Li-lon-Battery Management ICs using the ATA6870", 9184A-AUTO-03/10), sowie eine Methode von Infineon (A Cost Optimized Battery Management System with Active Cell Balancing for Lithium Ion Battery Stacks, Carl.Bonfiglio@infineon.com and Werner.Roessler@infineon.com, 2009 IEEE Vehicle Power and Propulsion Conference (VPPC) Pages: 304-9 DOI: 10.1109/VPPC.2009.5289837 Published:2009).

Die große Variation der Gesamtspannung bei herkömmlichen Energiespeichersystemen erzwingt einen weiten Eingangsspannungsbereich bei den anzuschließenden Geräten. Da elektronische Schaltungen im Allgemeinen fixe Spannungen benötigen, werden in der Regel DC/DC-Wandler zur Regelung der Eingangsspannung eingesetzt. Bei niedrigen Lastströmen ist deren Wirkungsgrad jedoch sehr schlecht und nimmt zudem mit steigender Eingangsspannung ab. Wäre es hingegen möglich, die Variation der Gesamtspannung eines Energiespeichersystems deutlich zu verringern, so ließe sich in vielen Anwendungen das Design der anzuschließenden Geräte vereinfachen und deren Wirkungsgrad steigern.

Der Erfindung liegt daher die Aufgabe zugrunde, ein verbessertes Verfahren zum Steuern der Ladezustände der einzelnen Energiespeicher eines Energiespeichersystems mit mehreren in Reihe geschalteten Energiespeichern und/oder seiner Gesamtspannung und/oder seines Gesamtstroms anzugeben, sowie ein geeignetes verbessertes Energiespeichersystem, auf dem ein solches Verfahren durchgeführt werden kann.

Diese Aufgabe wird erfindungsgemäß durch ein Verfahren zum Steuern der Ladezustände von Elementen eines Energiespeichersystems mit einer Reihenschaltung von mehreren Elementen gelöst, bei welchem Energiespeichersystem jedes Element
- einen einzelnen oder eine Gruppe von mehreren Energiespeichern sowie
- (a) einen Wechselschalter (Umschalter) zum Herausnehmen des Elements aus der Reihenschaltung und zum Überbrücken des herausgenommenen Elements oder (b) einen Trennungsschalter zum Herausnehmen des Elements aus der Reihenschaltung und einen Überbrückungsschalter zum Überbrücken des herausgenommenen Elements aufweist,
   derart, dass die Anzahl der in Reihe geschalteten Elemente durch ein Umlegen des Wechselschalters mindestens eines Elements zwischen einem das Element enthaltenden Zweig und einem Überbrückungszweig bzw. durch ein Umlegen von dessen Trennungs- und Überbrückungsschaltern zwischen deren An- und Aus-Zuständen variiert werden kann,
bei welchem Verfahren
- ein mit den anderen Elementen in Reihe geschaltetes Element aus der Reihenschaltung herausgenommen und überbrückt wird, indem
   (a) sein Wechselschalter aus dem das Element enthaltenden Zweig in den Überbrückungszweig umgelegt wird bzw.
   (b) sein Trennungsschalter aus dem An- in den Aus-Zustand umgelegt wird und sein Überbrückungsschalter aus dem Aus- in den An-Zustand umgelegt wird, und/oder
- ein aus der Reihenschaltung herausgenommenes und überbrücktes Element in die Reihenschaltung aufgenommen wird, indem
   (a) sein Wechselschalter aus dem Überbrückungszweig in den das Element enthaltenden Zweig umgelegt wird bzw.
   (b) sein Überbrückungsschalter aus dem An- in den Aus-Zustand umgelegt wird und sein Trennungsschalter aus dem Aus- in den An-Zustand umgelegt wird,
worin
die Überbrückung von Elementen des Energiespeichersystems und deren Aufnahme in die Reihenschaltung durch einen geeigneten Regelalgorithmus gesteuert werden, welcher beispielsweise in einer Regelungsschaltung, z.B. in einem internen Mikrocontroller oder in einem externen Controller, implementiert ist und eines der folgenden Ziele oder eine beliebige Kombination davon verfolgt:
a) Angleichen von Ladezuständen der einzelnen Energiespeicher aneinander,
b) Einschränkung der Gesamtspannung des Energiespeichersystems auf ein vorgegebenes Intervall,
c) Einschränkung des im Energiespeichersystem fließenden Stroms auf ein vorgegebenes Intervall,
d) Einhaltung sicherer Betriebsbedingungen, wie z.B. der Betriebstemperatur- oder Ladezustandsgrenzen für die Energiespeicher,
e) Vermeidung ungünstiger Betriebsbedingungen, wie z.B. von ungünstigen Betriebstemperaturen oder Ladezuständen für die Energiespeicher.

Das erfindungsgemäße Verfahren kann insbesondere die Ausgestaltung gemäß Anspruch 1 besitzen.

Die Erfindung richtet sich auch auf ein zur Durchführung des erfindungsgemäßen Verfahrens geeignetes Energiespeichersystem. Dieses kann insbesondere die Ausgestaltung gemäß Anspruch 13 besitzen. Das erfindungsgemäße Energiespeichersystem weist insbesondere stets eine Reihenschaltung von mehreren Elementen auf, wobei jedes Element einen einzelnen oder eine Gruppe von mehreren Energiespeichern sowie einen Wechselschalter (Umschalter) zum Herausnehmen des Elements aus der Reihenschaltung und zum Überbrücken des herausgenommenen Elements aufweist, derart, dass die Anzahl der in Reihe geschalteten Elemente durch ein Umlegen des Wechselschalters zwischen einem das Element enthaltenden Zweig und einem Überbrückungszweig variiert werden kann. An Stelle des Wechselschalters können alternativ zwei getrennte Schalter eingesetzt werden, wobei der eine - der sog. Trennungsschalter - das Element aus der Reihenschaltung herausnimmt und der andere - der sog. Überbrückungsschalter - das herausgenommene Element überbrückt.

Für die erfindungsgemäße Funktionalität genügt prinzipiell bereits ein einzelner einpoliger Wechselschalter (Umschalter), also ein Schalter mit mindestens drei Anschlüssen, der einen Stromkreis öffnen und anschließend oder gleichzeitig einen anderen schließen kann. Eine Realisierung ist z.B. über Relais möglich. Bei einer Realisierung z.B. mit Transistoren kommen hingegen vorzugsweise zwei Schalter zum Einsatz, insbesondere weil es (noch) keine Leistungstransistoren als Wechselschalter gibt.

Die Energiespeicher im Energiespeichersystem nach der Erfindung sind elektrisch derart miteinander zu einem Strang verbunden, dass sie einzeln oder als Gruppe aus dem Verbund herausgenommen und durch einen Bypass ersetzt werden können. Dies wird im Folgenden der Einfachheit halber kurz als Überbrückung des entsprechenden Elements der Reihenschaltung bezeichnet, das den einzelnen Energiespeicher bzw. die Gruppe von mehreren Energiespeichern enthält. Die Anzahl der Elemente in der Reihenschaltung im erfindungsgemäßen Energiespeichersystem ist damit eine steuerbare Größe. Dadurch ist es insbesondere möglich, die Gesamtspannung (die Strangspannung) des Energiespeichersystems weitgehend unabhängig vom Ladezustand der einzelnen Energiespeicher zu regeln.

Es können auch mehrere Reihenschaltungen (Stränge) beschriebener Art in einem Energiespeichersystem nach der Erfindung vorhanden sein, die als Ganzes parallel zueinander geschaltet sein oder aber gemeinsame Abschnitte mit Verzweigungen aufweisen können. Während ein derartiges Hinzuschalten weiterer Stränge unter anderem den Gesamtstrom und die Gesamtkapazität des Systems beeinflusst, bleibt es für die Betrachtung der Gesamtspannung ohne Relevanz. Der Einfachheit halber wird im Folgenden meist nur von einem der gegebenenfalls mehreren solchen Strängen (Reihenschaltungen) im erfindungsgemäßen System die Rede sein. Bei der Parallelschaltung mehrerer Stränge sind ggf. geeignete Schutzmaßnahmen sinnvoll, um Ausgleichsströme zwischen den Strängen zu vermeiden, wobei im einfachsten Fall bereits die Innenwiderstände der Zellen zur Strombegrenzung ausreichen. Alternativ können auch externe Widerstände, Dioden oder Transistoren eingesetzt werden.

Zum erfindungsgemäßen Überbrücken der Elemente der Reihenschaltung sind für jedes Element mindestens ein Wechselschalter oder zwei einfache Schalter, ein Trennungs- und ein Überbrückungsschalter, vorgesehen.

Im Aus-Zustand (geöffnetem Zustand) des Trennungsschalters bzw. im Zustand des Wechselschalters mit dem geöffneten das Element enthaltenden Zweig ist das Element aus der Reihenschaltung herausgenommen. Im An-Zustand (geschlossenem Zustand) des Überbrückungsschalters bei geöffnetem Trennungsschalter bzw. im Zustand des Wechselschalters mit geschlossenem Überbrückungszweig ist das Element in der Reihenschaltung durch den Bypass komplett ersetzt.

Da in der Reihenschaltung kein Strom mehr durch die Energiespeicherzellen des derart überbrückten Elements fließt, ist die Anzahl der Zellen im Strang und/oder die Zusammensetzung des Stranges nach dem Überbrücken anders als zuvor. Das erfindungsgemäß überbrückte Element ist komplett aus der Reihenschaltung herausgenommen. Insbesondere wird deshalb auch grundsätzlich kein Strom in dem überbrückten Element vergeudet, worin ein großer Vorteil der Erfindung gegenüber dem Stand der Technik besteht. Hiervon unberührt bleibt die Möglichkeit, die herausgenommene Zelle zum Speisen der Steuerelektronik zu verwenden, notwendig ist dies allerdings nicht.

Die Gesamtspannung des erfindungsgemäßen Energiespeichersystems kann weitgehend konstant, d.h. in ihrer Schwankung auf den Spannungsbereich eines einzelnen Elements beschränkt, gehalten werden. Dies lässt sich erreichen, indem das Energiespeichersystem mehr Elemente enthält, als für den bestimmungsgemäßen Gebrauch benötigt werden, wobei stets "schlechtere" Elemente überbrückt (weggeschaltet) und dafür "bessere" Elemente aktiv (durchgeschaltet) sind, wobei sich die Zusammensetzung der Reihenschaltung dynamisch variieren lässt. Das System kann zu diesem Zweck eine relativ große Anzahl von Energiespeicherzellen bzw. Elementen aufweisen, z.B. sind 100-200 Zellen im Verbund möglich.

Für das Funktionsprinzip ist es unerheblich, ob die Energiespeicher in einer Gruppe, die ein Element der Reihenschaltung bildet, seriell oder parallel angeordnet sind. Bei einer seriellen Anordnung der Energiespeicher innerhalb eines Elements ist gegebenenfalls eine zusätzliche Überwachung und Regelung der Spannungen einzelner Energiespeicher sinnvoll.

Je nach Anwendung kann erfindungsgemäß mittels eines geeigneten Regelalgorithmus, der z.B. in einem externen Controller, vorzugsweise in einem eingebauten Mikrocontroller, implementiert ist, darüber entschieden werden, welche Energiespeicher bzw. Elemente der Reihenschaltung jeweils aktiv und welche überbrückt sind. Ziel der Regelung ist es unter anderem, durch ein dynamisches Ein- und Ausschalten der Überbrückungen einen möglichst einheitlichen Ladezustand der Energiespeicher zu erzielen. Dabei kann eine Reihe von Randbedingungen berücksichtigt werden, die sich je nach Applikation unterscheiden können. Zum einen können die Betriebsparameter der Energiespeicher, wie z.B. deren Temperatur und Ladezustand (insbesondere die Spannung), überwacht werden. Durch geeignete Maßnahmen können unsichere Betriebszustände verhindert und unerwünschte vermieden werden. Zum anderen können Spannung und Strom des Gesamtsystems in einem vordefinierten Bereich gehalten werden. Die Zielwerte können sich dabei durchaus - im Sinne einer externen Steuergröße - dynamisch ändern. In einem externen Controller kann eine Änderung der Betriebs- und/oder Zielparameter sowie der Art der Regelung z.B. durch manuelle Eingabe, alternativ oder zusätzlich auch in Form eines aufzuspielenden Programms für einen eingebauten Prozessor, vorgesehen sein.

Es ist im erfindungsgemäßen Energiespeichersystem stets eine Steuerungseinheit vorgesehen, durch die die Wechsel- bzw. Trennungs- und Überbrückungsschalter der Elemente der Reihenschaltung angesteuert werden können und in welcher ein erfindungsgemäßer Regelungsalgorithmus implementiert ist. Die Steuerungseinheit kann insbesondere einen Mikrocontroller darstellen, der z.B. die Ausgangsspannung des Systems regelt, Eingabe von Zielparametern wie Strom und Spannung und/oder Überwachung der Betriebsparameter wie Temperatur und Ladezustand einzelner Energiespeicher erlaubt. Bevorzugte Ausführungsformen sind in den abhängigen Ansprüchen und in der nachfolgenden Beschreibung angegeben.

Besonders bevorzugt sind Ausführungsformen mit einer Verzögerungseinheit, insbesondere einer Verzögerungsschaltung, die für eine Schaltverzögerung zwischen dem Öffnen des Trennungsschalters und dem Schließen des Überbrückungsschalters und umgekehrt für ein Element, insbesondere für mehrere oder alle Elemente des Systems, sorgt. Mittels einer solchen Schaltverzögerung wird sichergestellt, dass der Trennungs- und der Überbrückungsschalter des Elements nicht zugleich im geschlossenen Zustand sind, mit anderen Worten, dass das jeweilige Element nicht über den Überbrückungsschalter kurzgeschlossen ist. Bei der Realisierung durch einen Wechselschalter ist diese Bedingung in der Regel automatisch erfüllt. Ansonsten ist auch für diesen vorzugsweise eine Verzögerungseinheit vorgesehen, die für eine Verlangsamung des Umschaltevorgangs sorgt.

Bei der Verwendung von Trennungs- und Überbrückungsschaltern ist für die Verzögerungseinheit vorzugsweise ein RS-Flipflop vorgesehen, das z.B. aus zwei NAND-Gattern aufgebaut ist.

Als Energiespeicher werden im Energiespeichersystem nach der Erfindung beispielsweise Akkumulatoren, insbesondere Lithiumakkumulatoren, eingesetzt. Es können aber grundsätzlich auch alle anderen Arten von Energiespeichern vorgesehen sein, die üblicherweise in Reihe geschaltet werden. Insbesondere ist der Einsatz von Kondensatoren, wie z.B. von Supercaps und/oder Lithium-lonen-Kondensatoren, im erfindungsgemäßen Energiespeichersystem möglich. Als ein oder mehrere Trennungsschalter werden in allen Ausführungsformen der Erfindung vor allem Transistoren, vorzugsweise MOSFETs, eingesetzt. Alternativ können Relais verwendet werden. Dies gilt ebenso für die Überbrückungsschalter. Wechselschalter können ebenfalls durch Relais realisiert werden.

Die Ansteuerung der Wechselschalter bzw. der Trennungs- und Überbrückungsschalter kann gegebenenfalls direkt durch den Mikrocontroller erfolgen. In Ausführungsformen mit Feldeffekttransistoren als Trennungs- und/oder Überbrückungsschaltern können ein oder mehrere Gatetreiber zum Schalten der Transistoren eingesetzt werden.

Das erfindungsgemäße Verfahren kann in jedem Betriebszustand des Energiespeichersystems eingesetzt werden.

Vorzugsweise wird beim Betrieb des erfindungsgemäßen Energiespeichersystems ein im obigen Sinne aktives Element gegen ein in die Reihenschaltung wieder aufgenommenes, bis dahin überbrücktes Element ausgetauscht. Wie eingangs bereits erörtert, kann dadurch die Anzahl der in Reihe geschalteten Elemente und/oder die Gesamtspannung oder der Strom des Energiespeichersystems unverändert gehalten werden. "Unverändert" kann dabei insbesondere bei der Betrachtung der Anzahl der aktiven Elemente "streng konstant" bedeuten. Im Allgemeinen, insbesondere bei der Betrachtung der Gesamtspannung oder des Stroms, bedeutet "unverändert" allerdings eine weitgehend geringfügige Änderung, die auf einen engen, gegebenenfalls vorgegebenen Wertebereich eingeschränkt ist. Zu dem genannten Zweck wird beispielsweise das überbrückte Element nach einer geeigneten Relaxationszeit wieder in die Reihenschaltung aufgenommen und dafür ein anderes nach den eingangs erwähnten Parametern vorübergehend "aussortiert" und überbrückt. Die Zusammensetzung der Reihenschaltung aus den einzelnen Elementen lässt sich auf diese Weise dynamisch variieren, ohne dass sich deren Anzahl oder die Gesamtspannung des Systems merkbar ändern müssen.

Ein zuverlässiger Betrieb des erfindungsgemäßen Energiespeichersystems ohne Unterbrechung ist daher selbst dann möglich, wenn einzelne Energiespeicher sogar ausfallen, und zwar im Gegensatz zu den herkömmlichen Systemen ohne jegliche Einbuße in der Leistung oder der Gesamtspannung/dem Gesamtstrom des Energiespeichersystem, sondern durch einfache und keine Zusatzmittel erfordernde Schritte. Die im erfindungsgemäßen Energiespeichersystem vorgesehene Steuerungseinheit kann einen Ausfall einer defekten Batterie vielmehr durch einen geeigneten und in der Regel unter anderem auch für solche Ausfälle programmierten Regelalgorithmus vielmehr als eine Standardsituation ohne extra Aufwand mit einer im System erfindungsgemäß implementierten regelungstechnischen und apparativen Abhilfe behandeln, nämlich durch ein dynamisches Austauschen der einzelnen Energiespeicher/Energiespeichergruppen/Elemente in einem Strang.

Wie ebenfalls oben erwähnt, wird das Öffnen des Trennungsschalters und das Schließen des Überbrückungsschalters eines Elements bzw. der inverse Vorgang vorzugsweise mit einer derartigen Zeitverzögerung durchgeführt, dass niemals beide Schalter für das Element gleichzeitig geschlossen sind. Dasselbe gilt für das Umlegen des Wechselschalters.

Weitere Vorteile der Erfindung und der genannten Steuerungsziele ergeben sich unter anderem aus folgenden Verwendungsbeispielen, wobei die darin genannten Vorrichtungs- und Verfahrensmerkmale auch in anderen Kombinationen zu einem erfindungsgemäßen Energiespeichersystem bzw. Betriebsverfahren führen können:

### Verwendungsbeispiel 1: Cell-Balancing

Um ein Cell-Balancing zu erzielen, werden beim Laden des Energiespeichersystems nach der Erfindung zunächst nur die Energiespeicher (im Allgemeinen als "Elemente" im Sinne der Erfindung bezeichnet) mit der geringsten Spannung geladen. Die übrigen Energiespeicher kommen nach und nach hinzu. Steigt die Spannung der einzelnen Energiespeicher unterschiedlich schnell, so werden die Energiespeicher mit der größten Spannung beim Überschreiten einer vorgegebenen Abweichung der Spannung von den übrigen Energiespeichern überbrückt, bis sich die Spannungen wieder angeglichen haben. Diese Angleichung erfolgt einerseits durch das weitere Ansteigen der Spannung der im Strang verbliebenen Energiespeicher und andererseits durch relaxationsbedingtes Absinken der Spannung bei den überbrückten Elementen. Hat sich die Spannung eines überbrückten Elements an die Spannungen der im Strang verbliebenen Elemente angeglichen, so wird die Überbrückung aufgehoben und der Energiespeicher wieder geladen. Durch diesen Mechanismus entsteht eine Pulsladung, deren Taktverhältnis vom individuellen Ladezustand und der individuellen Kapazität des einzelnen Energiespeichers abhängt. Beim Entladen funktioniert das Cell-Balancing im erfindungsgemäßen System in analoger Weise.

Beispielsweise wird beim Laden des Energiespeichersystems ein mit den anderen Elementen in Reihe geschaltetes Element beim Erreichen einer für dieses Element vorgegebenen Ladeschlussspannung aus der Reihenschaltung herausgenommen und überbrückt und beim Erreichen einer für dieses Element vorgegebenen Relaxationsschwellspannung wieder in die Reihenschaltung aufgenommen.

Beim Entladen wird beispielsweise ein Element beim Erreichen einer bestimmten Entladeschlussspannung herausgenommen und überbrückt und beim Erreichen einer bestimmten Relaxationsspannung wieder eingefügt. Bei einem reinen Cell-Balancing-Algorithmus kann die Zelle auch lediglich herausgenommen werden, d.h. der Relaxationsschwellwert wird in diesem Fall niemals erreicht.

Die Schwellwerte zum Umschalten zwischen Energiespeicher und Bypass werden durch einen geeigneten Regelalgorithmus vorgegeben, der beispielsweise in einem Mikrocontroller implementiert ist und die erfindungsgemäßen Wechsel- bzw. Trennungs- und Überbrückungsschalter ansteuert. Die Grundfunktionalität kann bereits mit konstanten Schwellwerten erzielt werden. Im Allgemeinen werden die Schwellwerte jedoch dynamisch an den Ladezustand der Energiespeicher angepasst, wobei der Regelalgorithmus je nach Applikation auch externe Steuergrößen mit einbeziehen kann. Beispiele für solche Steuergrößen sind Vorgaben bezüglich des Stroms und der Spannung beim Laden oder Entladen, sowie Betriebsparameter der Energiespeicher, wie z.B. deren Temperatur.

Ein besonderer Vorteil dieser Methode nach der Erfindung besteht darin, dass das Cell-Balancing unabhängig von der individuellen Kapazität der einzelnen Energiespeicher ist. Beim herkömmlichen passiven oder aktiven Cell-Balancing bestimmt das Elektronikdesign den maximalen Strom, der beim Balancing fließen kann. Dies begrenzt die maximalen Kapazitätsunterschiede, die durch Balancing ausgeglichen werden können, auf: Kapazitätsunterschied = Balancingstrom * Ladezeit. (Unter der "Kapazität" ist hier "Ladung" zu verstehen, d.h. im Englischen "capacity".)

Weisen die Energiespeicher z.B. durch Alterung größere Kapazitätsunterschiede auf oder fällt sogar ein Energiespeicher aus, so versagen diese Methoden.

Das geschilderte Beispiel für ein dynamisches Cell-Balancing nach der Erfindung weist hingegen keine Beschränkungen dieser Art auf. Ein sinnvoller und zuverlässiger Betrieb ist vielmehr selbst dann möglich, wenn einzelne Energiespeicher ausfallen.

### Verwendungsbeispiel 2: Speicherung regenerativer Energien

Wird das Energiespeichersystem nach der Erfindung von einer regenerativen Energiequelle gespeist, so variiert das Strom- und Spannungsangebot über die Zeit in einem weiten Bereich. Die Anpassung der Gesamtspannung des Energiespeichersystems durch das Überbrücken einzelner Teile bietet die Möglichkeit, das Energiespeichersystem dynamisch an den optimalen Arbeitspunkt der Energiequelle anzupassen (das sogenannte MPP-Tracking). Dies kann beispielsweise erreicht werden, indem die Gesamtspannung der Reihenschaltung in Richtung der steigenden Ausgangsleistung nachgeregelt wird.

Auf diese Weise ist es unter anderem möglich, auch niedrige Speisespannungen der Quelle zu nutzen, für die z.B. eine Umwandlung in die Netzspannung mit einem Wechselrichter nicht effizient oder nicht möglich ist. Wiederum sorgt ein geeigneter Regelalgorithmus, der z.B. in einem Mikrokontroller implementiert ist, für einen ähnlichen Ladezustand aller Energiespeicher in einem engen Bereich beim Betrieb.

Bricht die Leistung der regenerativen Energiequelle schließlich ganz zusammen, z.B. in der Nacht bei einer Photovoltaikanlage, so kann die Entladung des Energiespeichersystems bei einer hohen für den Wechselrichter optimalen Spannung erfolgen. Durch dieses Verfahren ist es insbesondere möglich, auf einen DC/DC-Wandler zwischen Photovoltaikanlage, Energiespeichersystem und Wechselrichter zu verzichten.

### Verwendungsbeispiel 3: Verringerung der Ausgangsspannungsvariation

Die elektrische Spannung von Energiespeichern hängt im Allgemeinen von deren Ladezustand ab. Bei einem konventionellen Aufbau müssen die angeschlossenen Geräte daher einen großen Spannungsbereich abdecken. Durch das dynamische Überbrücken von Elementen des erfindungsgemäßen Energiespeichersystems ist es möglich, die Gesamtspannung in einem sehr engen Bereich konstant zu halten. Dadurch lässt sich das Design der angeschlossenen Geräte vereinfachen und deren Wirkungsgrad erhöhen. Wiederum sorgt ein geeigneter Regelalgorithmus, der z.B. in einem Mikrokontroller implementiert ist, für einen weitgehend homogenen Ladezustand aller Energiespeicher beim Betrieb.

Die Erfindung kann grundsätzlich bei allen Arten von Energiespeichern eingesetzt werden, die zur Erhöhung der Spannung in Reihe geschaltet werden. Beispiele hierfür sind Lithiumakkumulatoren jeglicher Bauart und Kondensatoren zur Energiespeicherung (Supercaps und Lithium-lonen-Kondensatoren) jeglicher Bauart, mit Anwendung unter anderem zum Cell-Balancing oder zur Ausgangsspannungsregelung, sowie sonstige Akkumulatoren mit Anwendung unter anderem zur Ausgangsspannungsregelung.

Die Anwendung der Erfindung zum Cell-Balancing ist vor allem bei Systemen von Bedeutung, die beim Laden der Energiespeicher sparsam mit der Energie umgehen müssen, z.B. bei Energien aus regenerativen Quellen, einschließlich Energyharvesting.

Die Anwendung der Erfindung zur variablen Anpassung der Ausgangsspannung oder des Stroms ist vor allem bei der Zwischenspeicherung regenerativer Energien, insbesondere bei Photovoltaik-Anlagen, relevant, da diese Methode eine Anpassung an den optimalen Arbeitspunkt (MPP-Tracking) erlaubt.

Die Anwendung der Erfindung zur Stabilisierung der Ausgangsspannung bietet sich vor allem bei Systemen mit vielen Energiespeichern an, da der Effekt dann besonders ausgeprägt ist. Vorteile bringt das Verfahren vor allem dann, wenn der Wirkungsgrad der Energienutzung im Vordergrund steht (jedes Prozent zählt) oder wenn andernfalls Bauelemente einer höheren Spannungsklasse verwendet werden müssten, d.h. Bauelemente, die im Allgemeinen teurer und weniger effizient sind.

Insbesondere bei Kondensatoren kann das Konstanthalten bzw. Stabilisieren der Gesamtspannung sehr nützlich sein, da die Spannung beim Laden linear mit der Zeit steigt. Hier lässt sich eine stabile bzw. konstante Gesamtspannung insbesondere dadurch erreichen, dass beim Laden die Anzahl der Kondensatoren im Strang kontinuierlich reduziert wird, bis zum Schluss z.B. nur noch ein einzelner Kondensator in der Reihenschaltung übrig bleibt.

Bei einer vorteilhaften Variante des Systems und des Verfahrens nach der Erfindung wird beim Laden nach und nach von einer Reihenschaltung zu einer Parallelschaltung von Energiespeichern gewechselt, was im Folgenden an einem einfachen Beispiel mit acht Kondensatoren gezeigt wird:
Start bzw. Schritt 1: Acht Kondensatoren C sind/werden in Reihe geschaltet (alle leer). Schematisch: C+C+C+C+C+C+C+C.
Schritt 2: Ein Kondensator wird aus der Reihenschaltung herausgenommen und mit einem anderen parallel verschaltet (ggf. mit einem Cell-Balancing-Schritt durch ein kurzfristiges Herausnehmen): (C || C) + C + C + C + C + C + C.
Schritt 3: (C || C) + (C || C) + C + C + C + C. ... fortsetzen bis Schritt n: (C || C) + (C || C) + (C || C) + (C || C).
Schritt n+m: (C || C || C || C) + (C || C) + (C || C). ... fortsetzen, bis nach dem letzten Schritt alle Kondensatoren C parallel geschaltet sind: (C || C || C || C || C || C || C || C).

Während sich der Einsatz von Kondensatoren in diesem Beispiel aus dem oben genannten Grund als besonders günstig anbietet, kann es auch bei allen anderen Energiespeichern weiter oben spezifizierter Arten verwendet werden.

Für den beschriebenen Wechsel zwischen einer Reihen- und einer Parallelschaltung ist der Einsatz eines zusätzlichen Schalters sinnvoll, der beispielsweise durch einen Transistor, vorzugsweise einen Feldeffekttransistor, realisiert wird.

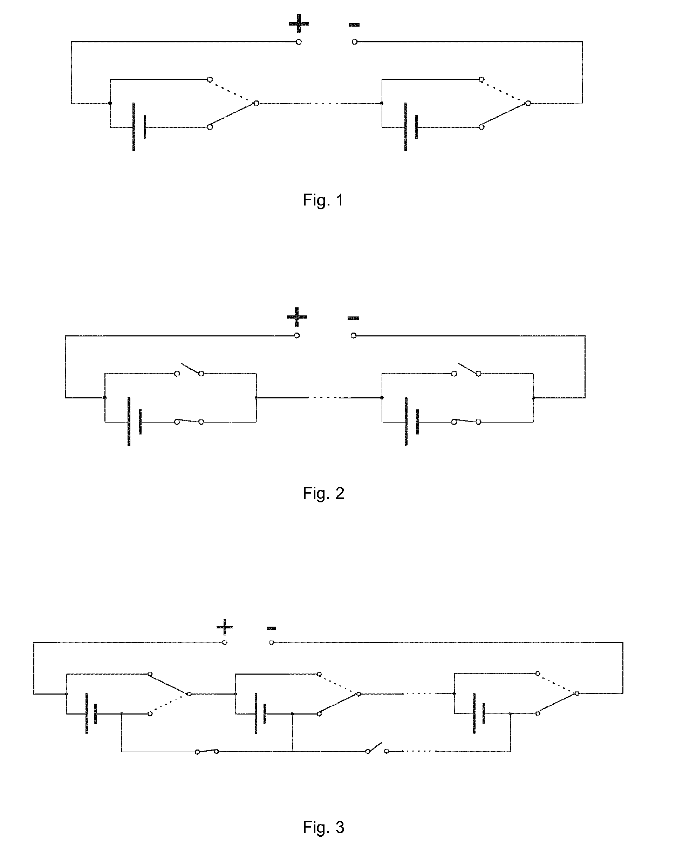

In einer Ausführungsform der Erfindung weist das Energiespeichersystem daher in allen Fällen nach der Erfindung zusätzlich mindestens einen Schalter, Transistor oder ein Relais auf, mittels dessen einzelne in Reihe geschaltete Elemente parallel zueinander geschaltet werden können (vgl. Fig. 3). In einem einfachen Fall ist hierzu bei zwei hintereinander verschalteten Elementen der erfindungsgemäßen Reihenschaltung ein derartiger zusätzlicher Schalter vorgesehen, mittels dessen diese zwei Elemente parallel zueinander geschaltet werden können. Vorzugsweise ist für zwei oder mehr Paare von Elementen des Energiespeichersystems, insbesondere für zwei oder mehr Paare von in Reihe geschalteten Elementen einer Reihenschaltung, jeweils ein solcher zusätzlicher Schalter vorgesehen, mit dem die Elemente eines solchen Paares parallel zueinander geschaltet werden können. Besonders bevorzugt ist das erfindungsgemäße Energiespeichersystem, bei dem jedes Paar der hintereinander in Reihe geschalteter Elemente der Reihenschaltung über einen derartigen Schalter verfügt, z.B. wie es in Fig. 3 schematisch dargestellt ist. In einem solchen sehr flexiblen Energiespeichersystem nach der Erfindung lässt sich insbesondere der oben beschriebene sukzessive Wechselvorgang von einer Reihen- zu einer Parallelschaltung sämtlicher Elemente eines Stranges realisieren, und umgekehrt.

Weitere Vorteile der Erfindung werden nachfolgend anhand der in den Zeichnungen und der zugehörigen Beschreibung dargestellten Ausführungsbeispiele erläutert. Diese sollen keine beschränkende Wirkung für den Erfindungsgegenstand haben, sondern als konkrete Beispiele dafür dienen.

Es zeigen:
- Fig. 1: ein erstes Ausführungsbeispiel des erfindungsgemäßen Energiespeichersystems mit Wechselschaltern;
- Fig. 2: ein zweites Ausführungsbeispiel des erfindungsgemäßen Energiespeichersystems mit Überbrückungs- und Trennungsschaltern;
- Fig. 3: Energiespeichersystem nach der Erfindung mit zusätzlichen Schaltern zur Parallelschaltung der Energiespeicher.

Figur 1 ist eine schematische Darstellung eines erfindungsgemäßen Energiespeichersystems, bei dem Wechselschalter zum Überbrücken bzw. Durchschalten von Elementen eingesetzt werden. In der Figur ist eine Reihenschaltung von mehreren Elementen (hier von einzelnen Energiespeichern) dargestellt, wobei beispielhaft nur das erste und das letzte Element des Stranges gezeigt sind. Beide Elemente weisen je einen Wechselschalter auf. In der in Fig. 1 gezeigten Position der Wechselschalter sind beide Elemente in der Reihenschaltung durchgeschaltet, indem beide Wechselschalter im jeweiligen das Element enthaltenden Zweig (Elementzweig) liegen.

Figur 2 ist eine schematische Darstellung einer dazu alternativen Variante mit Trennungs- und Überbrückungsschaltern. Die gezeigten Elemente weisen jeweils einen Überbrückungsschalter in seinem Aus-Zustand und einen Trennungsschalter in seinem An-Zustand auf, sodass beide Elemente in der Reihenschaltung aufgenommen sind.

Figur 3 ist eine schematische Darstellung einer Ausführungsform nach der Erfindung, bei der einzelne Elemente der Reihenschaltung parallel zueinander geschaltet werden können. In der Figur sind beispielhaft nur zwei erste und ein letztes Element des Stranges gezeigt, wobei jedes Element über je einen Wechselschalter verfügt. Zusätzlich sind einzelne Elementzweige in Fig. 3 über einen weiteren Zweig mit einem zusätzlichen Schalter verbunden, wobei diese Zusatzschalter beispielsweise als Transistoren realisiert werden können. In der Figur sind die ersten beiden Elementzweige über einen geschlossenen Zusatzschalter verbunden, während der erste Wechselschalter im Überbrückungszweig liegt. Dadurch sind die ersten beiden Elemente des Strangs zueinander parallel geschaltet.

## Patentansprüche

1. Verfahren zum Steuern der Ladezustände von Elementen eines Energiespeichersystems mit einer Reihenschaltung von mehreren Elementen, bei welchem Energiespeichersystem jedes Element
- einen einzelnen oder eine Gruppe von mehreren Energiespeichern sowie
- (a) einen Wechselschalter (Umschalter) zum Herausnehmen des Elements aus der Reihenschaltung und zum Überbrücken des herausgenommenen Elements oder (b) einen Trennungsschalter zum Herausnehmen des Elements aus der Reihenschaltung und einen Überbrückungsschalter zum Überbrücken des herausgenommenen Elements aufweist,
derart, dass die Anzahl der in Reihe geschalteten Elemente durch ein Umlegen des Wechselschalters mindestens eines Elements zwischen einem das Element enthaltenden Zweig und einem Überbrückungszweig bzw. durch ein Umlegen von dessen Trennungs- und Überbrückungsschaltern zwischen deren An- und Aus-Zuständen variiert werden kann,
bei welchem Verfahren
- ein mit den anderen Elementen in Reihe geschaltetes Element aus der Reihenschaltung herausgenommen und überbrückt wird, indem
(a) sein Wechselschalter aus dem das Element enthaltenden Zweig in den Überbrückungszweig umgelegt wird bzw.
(b) sein Trennungsschalter aus dem An- in den Aus-Zustand umgelegt wird und sein Überbrückungsschalter aus dem Aus- in den An-Zustand umgelegt wird, und/oder
- ein aus der Reihenschaltung herausgenommenes und überbrücktes Element in die Reihenschaltung aufgenommen wird, indem
(a) sein Wechselschalter aus dem Überbrückungszweig in den das Element enthaltenden Zweig umgelegt wird bzw.
(b) sein Überbrückungsschalter aus dem An- in den Aus-Zustand umgelegt wird und sein Trennungsschalter aus dem Aus- in den An-Zustand umgelegt wird,
worin
die Überbrückung der Elemente und deren Aufnahme in die Reihenschaltung durch einen Regelalgorithmus gesteuert werden, welcher insbesondere in einer Regelungsschaltung, vorzugsweise in einem Mikrocontroller, implementiert ist und eines der folgenden Ziele oder eine beliebige Kombination davon verfolgt:
a) Angleichen von Ladezuständen der einzelnen Energiespeicher aneinander,
b) Einschränkung der Gesamtspannung des Energiespeichersystems auf ein vorgegebenes Intervall,
c) Einschränkung des im Energiespeichersystem fließenden Stroms auf ein vorgegebenes Intervall,
d) Einhaltung sicherer Betriebsbedingungen, wie z.B. der Betriebstemperatur- oder Ladezustandsgrenzen für die Energiespeicher,
e) Vermeidung ungünstiger Betriebsbedingungen, wie z.B. von ungünstigen Betriebstemperaturen oder Ladezuständen für die Energiespeicher.

2. Verfahren nach Anspruch 1, bei dem ein aus der Reihenschaltung herausgenommenes und überbrücktes Element in die Reihenschaltung aufgenommen wird und ein anderes, mit den anderen Elementen in Reihe geschaltetes Element aus der Reihenschaltung herausgenommen und überbrückt wird, derart dass die Anzahl der in Reihe geschalteten Elemente, deren Gesamtspannung oder der Strom im Energiespeichersystem bei diesem Austausch unverändert bleibt.

3. Verfahren nach Anspruch 1 oder 2, bei dem die Schritte des Umlegens des Trennungs- und des Überbrückungsschalters des jeweiligen Elements mit einer derartigen Zeitverzögerung durchgeführt werden, dass stets der Trennungs- oder der Überbrückungsschalter des Elements im Aus-Zustand ist, bzw. bei dem das Umlegen des Wechselschalters mit einer derartigen Zeitverzögerung durchgeführt wird, dass stets in dem das Element enthaltenden Zweig oder in dem Überbrückungszweig kein Strom fließt.

4. Verfahren nach einem der Ansprüche 1 bis 3 zum dynamischen Cell-Balancing, bei dem ein mit den anderen Elementen in Reihe geschaltetes Element beim Erreichen oder Überschreiten einer für dieses Element vorbestimmten Ladeschlussspannung aus der Reihenschaltung herausgenommen und überbrückt und beim Erreichen oder Unterschreiten einer für dieses Element vorbestimmten Relaxationsschwellspannung wieder in die Reihenschaltung aufgenommen wird.

5. Verfahren nach einem der Ansprüche 1 bis 3 zum dynamischen Cell-Balancing, bei dem ein mit den anderen Elementen in Reihe geschaltetes Element beim Erreichen oder Unterschreiten einer für dieses Element vorbestimmten Entladeschlussspannung aus der Reihenschaltung herausgenommen und überbrückt und beim Erreichen oder Überschreiten einer für dieses Element vorbestimmten Relaxationsschwellspannung wieder in die Reihenschaltung aufgenommen wird.

6. Verfahren nach einem der Ansprüche 1 bis 5 zum Stabilisieren der Ausgangsspannung des Energiespeichersystems, bei dem die Gesamtspannung der Reihenschaltung in einem vorgegebenen Intervall gehalten wird.

7. Verfahren nach einem der Ansprüche 1 bis 6, bei dem zu Beginn des Ladevorgangs nur die Elemente mit der geringsten Ladespannung in die Reihenschaltung aufgenommen und geladen werden, während die anderen Elemente herausgenommen und überbrückt sind.

8. Verfahren nach einem der Ansprüche 1 bis 7, bei dem beim Laden oder Entladen des Energiespeichersystems Elemente, deren Spannung eine vorgegebene Abweichung von der Spannung der übrigen in Reihe geschalteten Elemente überschreitet, vorübergehend überbrückt werden, bis sich die Spannungen der einzelnen Elemente durch das Laden bzw. Entladen bei den Elementen der Reihenschaltung und die Relaxation bei den überbrückten Elementen bis unter die vorgegebene Abweichung angeglichen haben.

9. Verfahren nach einem der Ansprüche 1 bis 8 zum Speichern der Energie einer regenerativen Strom- oder Spannungsquelle, bei dem die Gesamtspannung der Reihenschaltung in Richtung der steigenden Ausgangsleistung der regenerativen Energiequelle nachgeregelt wird.

10. Verfahren nach einem der Ansprüche 1 bis 9, bei dem beim Laden des Energiespeichersystems einzelne Elemente, vorzugsweise Kondensatoren, Schritt für Schritt überbrückt und zu den übrigen in Reihe geschalteten Elementen parallel geschaltet werden, insbesondere derart, dass am Ende des Ladevorgangs statt der ursprünglichen Reihenschaltung eine Parallelschaltung der Elemente vorliegt.

11. Verfahren nach einem der Ansprüche 1 bis 10, bei dem ein Element, das nicht betriebsfähig geworden ist, aus der Reihenschaltung herausgenommen und überbrückt wird, insbesondere während des Betriebs des Energiespeichersystems.

12. Verfahren nach einem der Ansprüche 1 bis 11, bei dem einzelne Elemente während des Betriebs des Energiespeichersystems herausgenommen und überbrückt und in herausgenommenem und überbrücktem Zustand einer Wartung unterworfen werden.

13. Energiespeichersystem mit einer Reihenschaltung von mehreren Elementen, bei dem jedes Element
- einen einzelnen oder eine Gruppe von mehreren Energiespeichern sowie
- (a) einen Wechselschalter (Umschalter) zum Herausnehmen des Elements aus der Reihenschaltung und zum Überbrücken des herausgenommenen Elements oder (b) einen Trennungsschalter zum Herausnehmen des Elements aus der Reihenschaltung und einen Überbrückungsschalter zum Überbrücken des herausgenommenen Elements aufweist,
derart, dass die Anzahl der in Reihe geschalteten Elemente durch ein Umlegen des Wechselschalters mindestens eines Elements zwischen einem das Element enthaltenden Zweig und einem Überbrückungszweig bzw. durch ein Umlegen von dessen Trennungs- und Überbrückungsschaltern zwischen deren An- und Aus-Zuständen variiert werden kann, **dadurch gekennzeichnet, dass** das Energiespeichersystem eine Steuerungseinheit mit einem darin implementierten Regelalgorithmus zur Durchführung eines Verfahrens nach einem der Ansprüche 1 bis 12, insbesondere einen Mikrocontroller, aufweist, mittels welcher Steuerungseinheit das Umlegen des Wechselschalters bzw. der Trennungs- und Überbrückungsschalter von mindestens einem Element angesteuert werden kann.

14. Energiespeichersystem nach Anspruch 13, das ein RS-Flipflop, welches insbesondere aus zwei NAND-Gattern aufgebaut ist, zum Umlegen der Trennungs- und Überbrückungsschalter mindestens eines Elements aufweist.

15. Energiespeichersystem nach einem der Ansprüche 13 und 14, das zusätzlich mindestens einen Schalter, Transistor oder ein Relais enthält, mittels dessen einzelne in Reihe geschaltete Elemente parallel geschaltet werden können.

16. Verwendung des Energiespeichersystems nach einem der Ansprüche 13 bis 15 zum Stabilisieren der Ausgangsspannung, zur Speicherung regenerativer Energien und/oder zum dynamischen Cell-Balancing.
